(19) **Europäisches Patentamt**

**European Patent Office**

**Office européen des brevets**

(11) **EP 0 667 504 B1**

(12) **EUROPÄISCHE PATENTSCHRIFT**

(45) Veröffentlichungstag und Bekanntmachung des Hinweises auf die Patenterteilung:
**08.11.2000 Patentblatt 2000/45**

(51) Int. Cl.[7]: **F28F 1/36**, F28F 1/10, F28F 13/04

(21) Anmeldenummer: **95100280.7**

(22) Anmeldetag: **11.01.1995**

(54) **Wärmeaustauschrohr zum Kondensieren von Dampf**

Heat exchange pipe for condensing vapor

Tube d'échange de chaleur pour condenser la vapeur

(84) Benannte Vertragsstaaten:
**DE FR GB**

(30) Priorität: **11.02.1994 DE 4404357**

(43) Veröffentlichungstag der Anmeldung:
**16.08.1995 Patentblatt 1995/33**

(73) Patentinhaber: **WIELAND-WERKE AG**
**89079 Ulm (DE)**

(72) Erfinder:
• **Schüz, Gerhard, Dr.-Ing.**
**D-89269 Vöhringen (DE)**
• **Knab, Manfred, Dipl.-Ing.**
**D-89160 Dornstadt-Bollingen (DE)**
• **Klöckler, Robert**
**D-89257 Tiefenbach (DE)**

(56) Entgegenhaltungen:
**EP-A- 0 206 640      EP-A- 0 222 100**
**US-A- 3 260 652      US-A- 4 984 626**
**US-A- 5 240 070**

EP 0 667 504 B1

**Beschreibung**

Die Erfindung betrifft ein metallisches Wärmeaustauschrohr nach dem Oberbegriff des Anspruchs 1 bzw. 2 (vgl. etwa DE-PS 2.731.476).

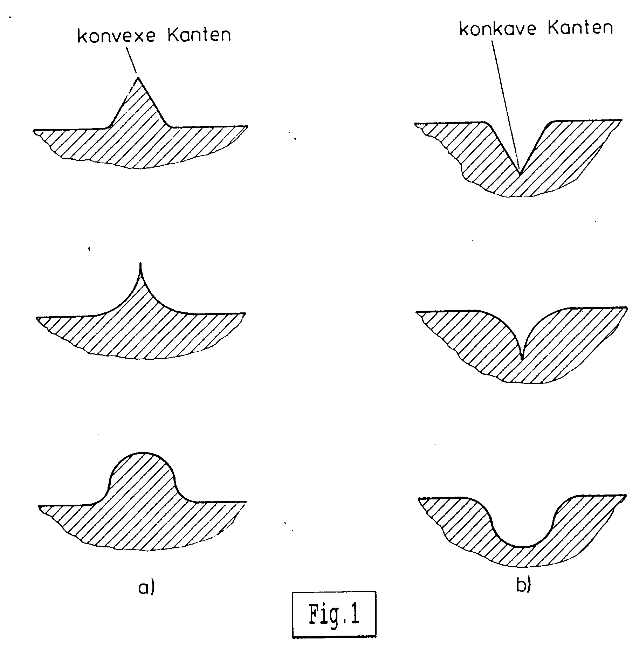

Unter "konvexen Kanten" sollen dabei nach außen erhabene, (aus dem Rippenmaterial) hervorstehende Kanten verstanden werden. "Konkave Kanten" sind relativ zur Oberfläche innenliegende Kanten (vgl. Fig. 1 a/l b). Dabei soll es im Sinne dieser Definition unerheblich sein, ob die Kante im Querschnitt durch gerade oder gebogene Linien begrenzt wird.

Kondensation tritt in vielen Bereichen der Kälte- und Klimatechnik sowie der Prozeß- und Energietechnik auf. Hierbei werden Dämpfe von Reinstoffen oder Gemischen vollständig oder partiell durch Entzug der Kondensationsenthalpie vom dampfförmigen in den flüssigen Zustand überführt.

Das Kühlmedium ist oft durch eine Wand vom Dampf getrennt. In der Technik werden Kondensatoren (Verflüssiger) häufig als waagerechte Rohrbündel-Wärmeaustauscher ausgeführt, bei denen die Dämpfe entweder auf der Rohraußen- oder der Rohrinnenseite kondensiert werden. Viele Verdampfer werden durch Kondensation eines Dampfes beheizt. Diese können sowohl horizontal als auch vertikal angeordnet sein.

Zur Verbesserung des Wärmeübergangs kann die Trennwand sowohl auf der Kühlmittel- als auch auf der Dampfseite mit speziellen Strukturen (in der Regel Rippen, wellenartige Rillen oder pyramidenähnliche Erhebungen) versehen werden. Diese können sowohl in Richtung der Rohrachse als auch senkrecht oder in jedem anderen Winkel dazu verlaufen. Auf der Dampfseite dienen diese zur Vergrößerung der Oberfläche. Bei Verwendung spezieller Strukturen werden zusätzlich Oberflächeneffekte wirksam. Infolge der Veränderung des Sättigungsdampfdrucks über gekrümmten Phasengrenzflächen (Menisken) kommt es in konvexen (nach außen gewölbten) Oberflächenregionen zur Verdünnung des Kondensatfilms und damit zur lokalen Intensivierung des Wärmeübergangs. Die Kondensation findet im wesentlichen an den am stärksten konvex gekrümmten Rippenspitzen statt. Bei waagerechten Rohren mit Querrippen z.B. wird das entstehende Kondensat durch Oberflächenkräfte zum Rippengrund hingezogen, von wo es infolge der Gravitation nach unten abtropft.

Zur Vermehrung der konvexen Kanten wurden Rippenrohre mit speziellem Rippenprofil entwickelt (vgl. etwa obige DE-PS 2.731.476). Außerdem wurde die Rippendichte immer weiter gesteigert. Durch die zunehmende Kondensatrückhaltung in den Rippenzwischenräumen aufgrund des Kapillareffektes und der damit verbundenen Blockierung der Oberfläche durch Kondensat sind der Intensivierung des Wärmeübergangs durch Steigerung der Rippendichte jedoch Grenzen gesetzt.

Durch das Kerben von Rippen oder des Nutengrundes wurden ebenfalls mehr konvexe Kanten erzeugt (z. B. DE-OS 1.501.656/EP-OS 0.206.640 EP 0.222.100 A2). Mit dieser Variante sind der Intensivierung des Wärmeübergangs durch eine bestimmte Feinheit der Kerben Grenzen gesetzt; eine weitere Verkleinerung der Kerben erhöht die Kondensatrückhaltung in den Kerben.

Ferner wurden auf eine berippte Oberfläche pyramidenartige Erhöhungen aufgebracht (z. B. US-PS 4.245.695). An den Rippenspitzen wie auch den Kanten der Pyramiden kommt es zur Filmverdünnung. Die Pyramiden dürfen jedoch nicht zu dicht beieinander liegen, da sonst das Kondensat zwischen ihnen zurückgehalten wird.

Andere Varianten beruhen auf der Erzeugung von gespaltenen Rippenspitzen (z. B. Y-förmige Rippen nach DE-PS 2.758.527 oder Rippen mit drei Spitzen nach DE-PS 3.332.282). Durch diese Techniken wird der effektive Rippenabstand jedoch vermindert, was im Hinblick auf die Kondensatrückhaltung durch Kapillarkräfte ungünstig ist.

Der Erfindung liegt daher die Aufgabe zugrunde, ein Wärmeaustauschrohr der genannten Art so zu verbessern, daß möglichst große konvexe Kantenlängen zur Filmverdünnung entstehen, wobei ausreichende Abstände zwischen den einzelnen Rippen zur Vermeidung von Kondensatrückhaltung bestehen bleiben sollen.

Die Aufgabe wird bei quer- und längsberippten Rohren erfindungsgemäß dadurch gelöst, daß die Rippen durchgehend mit gleichmäßiger Rippenhöhe H verlaufen, wobei die Rippenflanken durch voneinander beabstandete Vertiefungen strukturiert sind, wobei die Vertiefungen von den Rippenspitzen ausgehen und in Richtung des Rippengrundes mit einer Tiefe von 20 bis 80 % der Rippenhöhe H verlaufen.

Durch das Anbringen von Vertiefungen an den Rippenflanken wird die konvexe Kantenlänge stark erhöht. In Rippenmitte bleibt ein Steg stehen, so daß diese Vertiefungen auf beiden Seiten der Rippen angebracht werden können. Bei richtiger Wahl der geometrischen Parameter können nach der Erfindung erheblich mehr konvexe Kanten erzeugt werden als bei anderen bekannten Verfahren (vgl. z. B. oben DE-OS 1.501.656/EP-OS 0.206.640). Nach einer bevorzugten Ausführungsform der Erfindung sind sowohl bei quer- als auch bei längsberippten Rohren 4 bis 30 Vertiefungen/cm Rippenlänge angeordnet.

Die Gestalt der Vertiefungen läßt sich in weiten Grenzen variieren: So können die Vertiefungen einen ballig gerundeten, halbkreisförmigen, halbovalförmigen, rechteckigen, trapezförmigen oder dreieckförmigen Längsschnitt (parallel zur Rippenflanke gesehen) aufweisen, wobei der Querschnitt (senkrecht zur

Rippenflanke gesehen) rechteckig, dreieckig, gerundet, trapezförmig oder rautenförmig sein kann.

Die Art der Strukturen an den Rippenflanken können sehr unterschiedlich ausgeführt werden, so sind die Vertiefungen in den beiden Rippenflanken einer Rippe erfindungsgemäß jeweils zueinander fluchtend oder gegeneinander versetzt angeordnet.

Durch die Kombination der oben aufgezeigten Parameter können unterschiedliche Strukturen für die Rippenflanken erzeugt werden, insbesondere dann, wenn die Vertiefungen in den beiden Rippenflanken einer Rippe jeweils eine unterschiedliche Längs- bzw. Querschnittsform aufweisen und/oder mit unterschiedlicher Teilung T angeordnet sind.

Es empfiehlt sich insbesondere, die erfindungsgemäßen Vertiefungen auf Rippenrohren mit 10 bis 80 Rippen/Zoll anzubringen, die eine Rippenhöhe H = 0,5 bis 1,7 mm aufweisen.

Erfindungsgemäß gestaltete Wärmeaustauschrohre eignen sich auch als Verdampferrohre (Verdampfung außen), wenn die Rippenspitzen gestaucht sind, so daß nahezu geschlossene Kanäle unter der äußeren Rohroberfläche entstehen.

Zur Intensivierung des Wärmeübergangs können die erfindungsgemäß vorgeschlagenen, strukturierten Rippenflanken mit unterschiedlichen Strukturen auf der Rohrinnenseite kombiniert werden. Dabei wird vorzugsweise vorgeschlagen, daß die Innenseite schraubenlinienförmig verlaufende Innenrippen aufweist. Nach einer anderen Alternative weist die Innenseite Wellungen auf, die unter demselben oder einem anderen Steigungswinkel verlaufen, wie die Schraubenlinie des Rippengrundes der äußeren Rippen. In Abänderung dieser Variante können die auf der Innenseite angeordneten Wellungen unterbrochen sein. Eine weitere Verbesserung wird dadurch erzielt, daß die Innenrippen bzw. Wellungen ihrerseits strukturiert sind.

Die Erfindung wird anhand der folgenden Ausführungsbeispiele näher erläutert. Es zeigt:

| | |
|---|---|
| Figur 2 | schematisch einen Ausschnitt aus einem erfindungsgemäßen Wärmeaustauschrohr, |
| Figur 3 | eine Vorrichtung zur Herstellung eines erfindungsgemäßen Wärmeaustauschrohres, |
| Figur 4 | eine strukturierte Walzscheibe zur Verwendung in einer Vorrichtung nach Figur 3, |
| Figur 5 | verschiedene Längsschnittformen der erfindungsgemäßen Vertiefungen, |
| Figur 6 a - 6 e | verschiedene Querschnittsformen der erfindungsgemäßen Vertiefungen, |
| Figur 7 a - 7 c | unterschiedliche Anordnungen der erfindungsgemäßen Vertiefungen auf den Rippenflanken. |

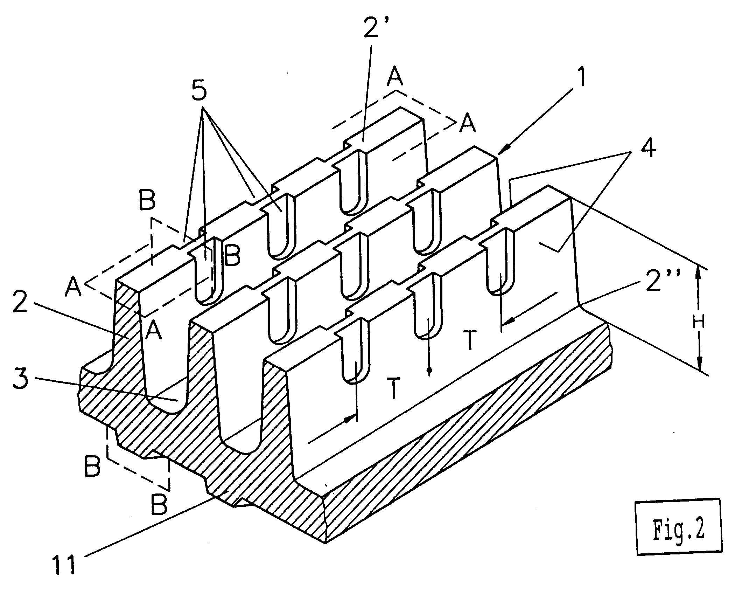

Figur 2 zeigt schematisch ein integrales Rippenrohr 1, auf dessen Außenseite Rippen 2 schraubenlinienförmig umlaufen, zwischen denen eine Nut 3 gebildet ist. Die Rippen 2 weisen eine gleichmäßige Höhe H auf. In die Rippenflanken 4 sind Vertiefungen 5 eingedrückt, die sich im vorliegenden Fall jeweils von der Rippenspitze 2' zum Rippengrund 2'' erstrecken. Die Teilung der Vertiefungen 5 (Abstand von Mitte zu Mitte) ist mit T bezeichnet.

Die Herstellung des erfindungsgemäßen Rippenrohres 1 erfolgt durch einen Walzvorgang (vgl. US-PSen 1.865.575/3.327.512/EP 0.222.100 A2) mittels der in Figur 3 dargestellten Vorrichtung.

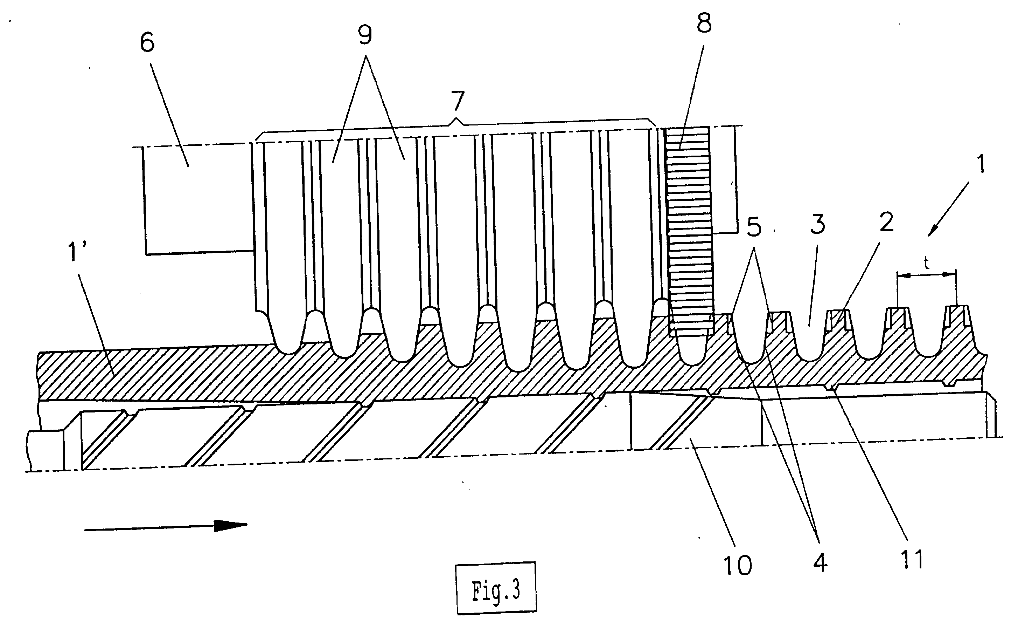

Es wird eine Vorrichtung verwendet, die aus n = 3 Werkzeughaltern 6 besteht, in die jeweils ein Walzwerkzeug 7 und mindestens eine nachgeschaltete, strukturierte Walzscheibe 8 integriert sind (in Figur 3 ist nur ein Werkzeughalter 6 dargestellt. Es können aber bspw. vier oder mehr Werkzeughalter 6 verwendet werden). Die Werkzeughalter 6 sind jeweils um $\alpha = 360°/n$ versetzt am Umfang des Rippenrohres angeordnet. Die Werkzeughalter 6 sind radial zustellbar. Sie sind ihrerseits in einem ortsfesten (nicht dargestellten) Walzkopf angeordnet (nach einer anderen Variante wird das Rohr bei sich drehendem Walzkopf lediglich axial vorgeschoben).

Das in Pfeilrichtung in die Vorrichtung einlaufende Glattrohr 1' wird durch die am Umfang angeordneten, angetriebenen Walzwerkzeuge 7 in Drehung versetzt, wobei die Achsen der Walzwerkzeuge 7 schräg zur Rohrachse verlaufen. Die Walzwerkzeuge 7 bestehen in an sich bekannter Weise aus mehreren nebeneinander angeordneten Walzscheiben 9, deren Durchmesser in Pfeilrichtung ansteigt. Die zentrisch angeordneten Walzwerkzeuge 7 formen die schraubenlinienförmig umlaufenden Rippen 2 aus der Rohrwandung des Glattrohres 1', wobei das Glattrohr 1' hier durch einen profilierten Walzdorn 10 unterstützt wird. Hierdurch entstehen gleichzeitig die mit Ziffer 11 bezeichneten, schraubenlinienförmig umlaufenden Rippen 11 auf der Innenseite des Rohres 1.

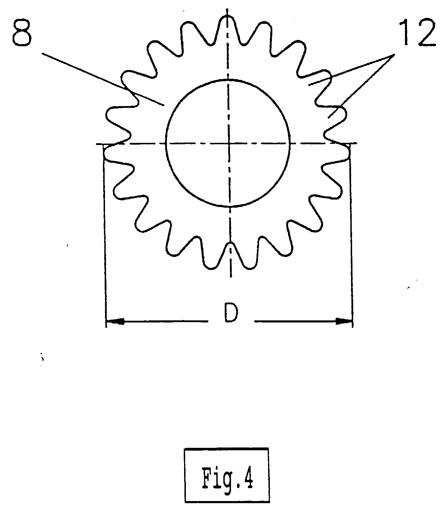

Die Vertiefungen 5 entstehen, indem die strukturierte Walzscheibe 8 des Durchmessers D jeweils mit Zähnen 12 in die Rippenflanken 4 eingreift (vgl. Figur 4). Durch das Einwalzen der Vertiefungen 5 kann es am Grund der Vertiefungen 5 zum Auskragen des Werkstoffs kommen.

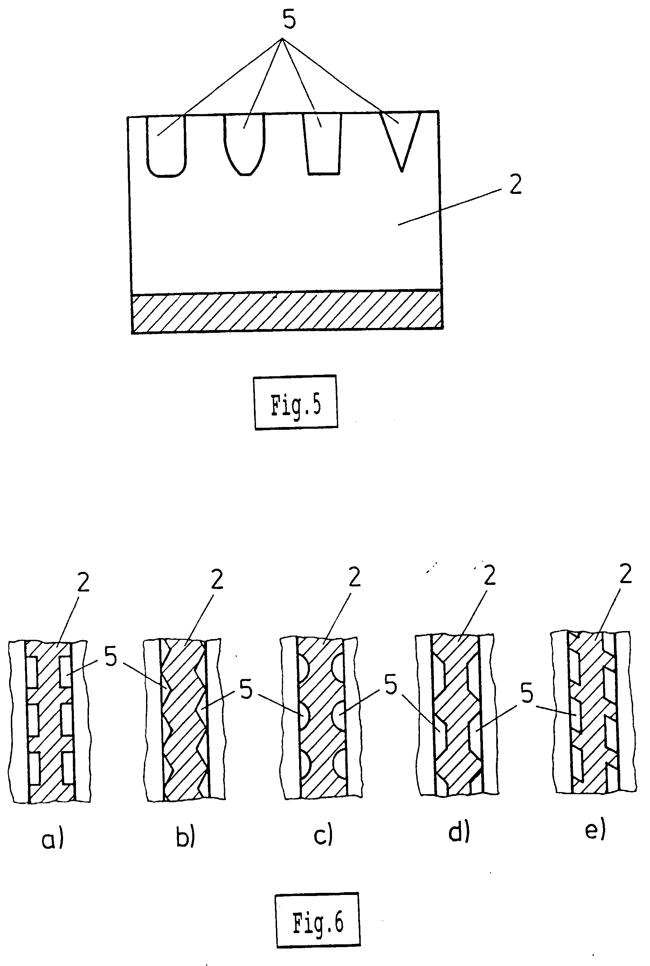

Die Figuren 5 und 6 a - 6 e zeigen mögliche Längs- bzw. Querschnittsformen der Vertiefungen 5 (gemäß der Schnittebenen A - A bzw. B - B in Figur 2).

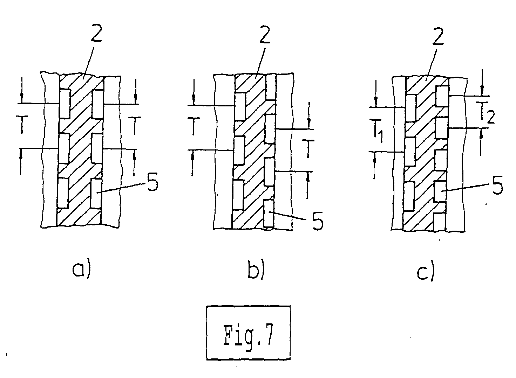

Figur 7 a zeigt die fluchtende Anordnung von Vertiefungen 5, Figur 7 b die versetzte Anordnung von Vertiefungen 5 (bei jeweils gleicher Teilung T auf beiden Rippenflanken 4). Figur 7 c zeigt die Anordnung von Vertiefungen 5 bei unterschiedlichen Teilungen $T_1$ bzw. $T_2$.

Zahlenbeispiel:

Nach dem beschriebenen Walzverfahren wurden erfindungsgemäße (innen glatte) Rippenrohre 1 hergestellt mit 40 Rippen/Zoll (Rippenteilung t = 0,64 mm) und einer Rippenhöhe H = 1 mm bei einer mittleren Rippendicke von 0,25 mm. Strukturierte Walz scheiben 8 haben Vertiefungen 5 mit näherungsweise halbovalförmiger Form ca. 0,06 mm weit in die Rippenflanke 4 bei einer Teilung von T = 0,6 mm erzeugt.

Bei einer experimentellen Nachmessung ergibt sich bei der Kondensation von Kältemittel R-22 bei $T_c = 45\,°$C eine Erhöhung der übertragenen Leistung von etwa 30 % gegenüber einem unstrukturierten Rippenrohr derselben Abmessungen.

Die erfindungsgemäße Verwendung von strukturierten Rippenflanken erstreckt sich insbesondere auf die Verflüssigung von Kältemitteldämpfen (Reinstoffe und Gemische) auf der Rohraußenseite.

Anstelle der bislang häufig verwendeten Sicherheitskältemittel kann auch Ammoniak benutzt werden. Da Ammoniak eine hohe Oberflächenspannung aufweist, sind die erfindungsgemäßen Rippenrohre mit strukturierten Rippenflanken hierfür besonders geeignet. In analoger Weise lassen sich Rippenrohre mit strukturierten Flanken auch für die Kondensation von Wasserdampf einsetzen. Ebenso eignen sie sich für Kohlenwasserstoffdämpfe oder -gemische, wie sie in der Prozeßtechnik auftreten.

**Patentansprüche**

1. Metallisches Wärmeaustauschrohr (1) mit auf der Außenseite ring- oder schraubenlinienförmig umlaufenden Rippen (2) zur Kondensation von Dämpfen aus Reinstoffen oder Gemischen auf der Rohraußenseite, wobei die Rippen (2) konvexe Kanten zur Filmverdünnung aufweisen, dadurch gekennzeichnet, daß die Rippen (2) durchgehend mit gleichmäßiger Rippenhöhe H verlaufen, wobei die Rippenflanken (4) durch voneinander beabstandete Vertiefungen (5) strukturiert sind, wobei die Vertiefungen (5) von den Rippenspitzen (2') ausgehen und in Richtung des Rippengrundes (2'') mit einer Tiefe von 20 bis 80 % der Rippenhöhe H verlaufen.

2. Metallisches Wärmeaustauschrohr (1) mit auf der Außenseite in Axialrichtung verlaufenden Rippen (2) zur Kondensation von Dämpfen aus Reinstoffen oder Gemischen auf der Rohraußenseite, wobei die Rippen (2) konvexe Kanten zur Filmverdünnung aufweisen, dadurch gekennzeichnet, daß die Rippen (2) durchgehend mit gleichmäßiger Rippenhöhe H verlaufen, wobei die Rippenflanken (4) durch voneinander beabstandete Vertiefungen (5) strukturiert sind, wobei die Vertiefungen (5) von den Rippenspitzen (2') ausgehen und in Richtung des Rippengrundes (2'') mit einer Tiefe von 20 bis 80 % der Rippenhöhe H verlaufen.

3. Wärmeaustauschrohr nach Anspruch 1 oder 2, dadurch gekennzeichnet, daß 4 bis 30 Vertiefungen (5)/cm Rippenlänge angeordnet sind.

4. Wärmeaustauschrohr nach einem oder mehreren der Ansprüche 1 bis 3, dadurch gekennzeichnet, daß die Vertiefungen (5) einen ballig gerundeten, halbkreisförmigen, halbovalförmigen, rechteckigen, trapezförmigen oder dreieckigen Längsschnitt (parallel zur Rippenflanke (4) gesehen) aufweisen.

5. Wärmeaustauschrohr nach einem oder mehreren der Ansprüche 1 bis 4, dadurch gekennzeichnet, daß die Vertiefungen (5) einen rechteckigen, dreieckigen, gerundeten, trapezförmigen oder rautenförmigen Querschnitt (senkrecht zur Rippenflanke (4) gesehen) aufweisen.

6. Wärmeaustauschrohr nach einem oder mehreren der Ansprüche 1 bis 5, dadurch gekennzeichnet, daß die Vertiefungen (5) in den beiden Rippenflanken (4) einer Rippe (2) jeweils zueinander fluchtend oder gegeneinander versetzt angeordnet sind.

7. Wärmeaustauschrohr nach einem oder mehreren der Ansprüche 1 bis 6, dadurch gekennzeichnet, daß die Vertiefungen (5) in den beiden Rippenflanken (4) einer Rippe (2) jeweils eine unterschiedliche Längs- bzw. Querschnittsform aufweisen und/oder mit unterschiedlicher Teilung T angeordnet sind.

8. Wärmeaustauschrohr nach einem oder mehreren der Ansprüche 1 und 3 bis 7, dadurch gekennzeichnet, daß es 10 bis 80 Rippen (2)/Zoll mit einer Rippenhöhe H = 0,5 bis 1,7 mm aufweist.

9. Wärmeaustauschrohr nach einem oder mehreren der Ansprüche 1 bis 8, dadurch gekennzeichnet, daß die Rippenspitzen (2') gestaucht sind.

10. Wärmeaustauschrohr nach einem oder mehreren der Ansprüche 1 bis 9, dadurch gekennzeichnet, daß die Innenseite des Rohres (1) strukturiert ist.

11. Wärmeaustauschrohr nach Anspruch 10, dadurch gekennzeichnet,

daß es schraubenlinienförmig verlaufende Innenrippen (11) aufweist.

12. Wärmeaustauschrohr nach Anspruch 10,
dadurch gekennzeichnet,
daß die Innenseite Wellungen aufweist, die unter demselben oder einem anderen Steigungswinkel verlaufen wie die Schraubenlinie des Rippengrundes der äußeren Rippen (2).

13. Wärmeaustauschrohr nach Anspruch 12,
dadurch gekennzeichnet,
daß die auf der Innenseite angeordneten Wellungen unterbrochen sind.

14. Wärmeaustauschrohr nach einem oder mehreren der Ansprüche 11 bzw. 12/13,
dadurch gekennzeichnet,
daß die Innenrippen (11) bzw. Wellungen strukturiert sind.

**Claims**

1. Metallic heat exchange tube (1) having, on the outside, circumferential ribs (2), which are annular or in helical-line form, for the condensation of vapours of pure substances or mixtures on the outside of the tube, the ribs (2) having convex edges for film dilution, characterised in that the ribs (2) extend throughout with a uniform rib height H, the rib flanks (4) being structured by depressions (5) arranged at a distance from one another, the depressions (5) starting from the rib tips (2') and extending in the direction towards the rib base (2'') with a depth of from 20 to 80% of the rib height H.

2. Metallic heat exchange tube (1) having, on the outside, axially extending ribs (2) for the condensation of vapours of pure substances or mixtures on the outside of the tube, the ribs (2) having convex edges for film dilution, characterised in that the ribs (2) extend throughout with a uniform rib height H, the rib flanks (4) being structured by depressions (5) which are arranged at a distance from one another, the depressions (5) starting from the rib tips (2') and extending in the direction towards the rib base (2'') with a depth of from 20 to 80% of the rib height H.

3. Heat exchange tube according to claim 1 or 2, characterised in that from 4 to 30 depressions (5)/cm rib length are provided.

4. Heat exchange tube according to one or more of claims 1 to 3, characterised in that the depressions (5) have a spherically rounded, semi-circular, semi-oval, rectangular, trapezoidal or triangular longitudinal section (viewed parallel to the rib flank (4)).

5. Heat exchange tube according to one or more of claims 1 to 4, characterised in that the depressions (5) have a rectangular, triangular, rounded, trapezoidal or rhomboidal cross-section (viewed perpendicularly to the rib flank (4)).

6. Heat exchange tube according to one or more of claims 1 to 5, characterised in that the depressions (5) in the two rib flanks (4) of a rib (2) are arranged in such a manner that they are aligned with one another or offset relative to one another.

7. Heat exchange tube according to one or more of claims 1 to 6, characterised in that the depressions (5) in the two rib flanks (4) of a rib (2) have a different longitudinal or cross-sectional shape and/or are arranged with a different spacing T.

8. Heat exchange tube according to one or more of claims 1 and 3 to 7, characterised in that it has from 10 to 80 ribs (2)/inch with a rib height H = 0.5 to 1.7 mm.

9. Heat exchange tube according to one or more of claims 1 to 8, characterised in that the rib tips (2') are upset.

10. Heat exchange tube according to one or more of claims 1 to 9, characterised in that the inside of the tube (1) is structured.

11. Heat exchange tube according to claim 10, characterised in that it has inner ribs (11) extending in helical-line form.

12. Heat exchange tube according to claim 10, characterised in that the inside has undulations which extend under the same or a different angle of inclination as the helical line of the rib base of the outer ribs (2).

13. Heat exchange tube according to claim 12, characterised in that the undulations arranged on the inside are interrupted.

14. Heat exchange tube according to one or more of claims 11 or 12/13, characterised in that the inner ribs (11) or undulations are structured.

**Revendications**

1. Tube métallique d'échange de chaleur (1) comportant des nervures (2) s'étendant circonférentiellement sous la forme de lignes annulaires ou hélicoïdales sur la face extérieure et servant à condenser des vapeurs de substances pures ou de mélanges sur la face extérieure du tube, les nervures (2) possédant des bords convexes pour réaliser un amincissement de film, caractérisé en ce que les nervures (2) s'étendent d'une manière continue avec une hauteur uniforme H, les flancs (4) des nervures étant structurés par des renfoncements (5) distants les uns des autres, et les renfoncements (5) partant des sommets (2') des nervures et s'étendant en direction de la base (2") des nervures sur une profondeur de 20 à 30 % de la hauteur H des nervures.

2. Tube métallique d'échange de chaleur (1) comportant des nervures (2) s'étendant dans la direction axiale sur la face extérieure et servant à condenser des vapeurs de substances pures ou de mélanges sur la face extérieure du tube, les nervures (2) possédant des bords convexes pour réaliser un amincissement de film, caractérisé en ce que les nervures (2) s'étendent d'une manière continue avec une hauteur uniforme H, les flancs (4) des nervures étant structurés par des renfoncements (5) distants les uns des autres, et les renfoncements (5) partant des sommets (2') des nervures et s'étendant en direction de la base (2") des nervures sur une profondeur de 20 à 80 % de la hauteur H des nervures.

3. Tube d'échange de chaleur selon la revendication 1 ou 2, caractérisé en ce qu'il est prévu 4 à 30 renfoncements (5) / cm de longueur de nervure.

4. Tube d'échange de chaleur selon une ou plusieurs des revendications 1 à 3, caractérisé en ce que les renfoncements (5) possèdent selon une coupe longitudinale (vue parallèlement aux flancs (4) des nervures) une forme arrondie, une forme de demi-cercle, une forme de semi-ovale, une forme rectangulaire, une forme trapézoïdale ou une forme triangulaire.

5. Tube d'échange de chaleur selon une ou plusieurs des revendications 1 à 4, caractérisé en ce que les renfoncements (5) possèdent selon une coupe transversale (vue perpendiculairement au flanc (4) des nervures) une forme rectangulaire, triangulaire, arrondie, trapézoïdale ou une forme de losange.

6. Tube d'échange de chaleur selon une ou plusieurs des revendications 1 à 5, caractérisé en ce que les renfoncements (5) sont disposés dans les deux flancs (4) d'une nervure (2) en étant respectivement alignés ou décalés l'un par rapport à l'autre.

7. Tube d'échange de chaleur selon une ou plusieurs des revendications 1 à 6, caractérisé en ce que les renfoncements (5) dans les deux flancs (4) d'une nervure (2) possèdent des formes respectivement différentes en coupe longitudinale ou en coupe transversale et/ou ont des pas de répartition T différents.

8. Tube d'échange de chaleur selon une ou plusieurs des revendications 1 et 3 à 7, caractérisé en ce qu'il comporte 10 à 80 nervures (2) / 2,54 cm avec une hauteur de nervure H = 0,5 à 1,7 mm.

9. Tube d'échange de chaleur selon une ou plusieurs des revendications 1 à 8, caractérisé en ce que les sommets (2') des nervures sont aplatis.

10. Tube d'échange de chaleur selon une ou plusieurs des revendications 1 à 9, caractérisé en ce que la face intérieure du tube (1) est structurée.

11. Tube d'échange de chaleur selon la revendication 10, caractérisé en ce qu'il comporte des nervures intérieures (11) qui s'étendent suivant des lignes hélicoïdales.

12. Tube d'échange de chaleur selon la revendication 10, caractérisé en ce que la face intérieure comporte des ondulations, qui s'étendent sous un angle d'inclinaison identique ou différent de celui de la ligne hélicoïdale de la base des nervures extérieures (2).

13. Tube d'échange de chaleur selon la revendication 12, caractérisé en ce que les ondulations disposées sur la face intérieure sont interrompues.

14. Tube d'échange de chaleur selon une ou plusieurs des revendications 11 ou 12/13, caractérisé en ce que les nervures intérieures (11) ou les ondulations sont structurées.

konvexe Kanten

konkave Kanten

a)

b)

**Fig.1**

EP 0 667 504 B1

Fig.2

Fig.3

EP 0 667 504 B1

Fig.4

**Fig.5**

a)     b)     c)     d)     e)

**Fig.6**

a)  b)  c)

Fig. 7